# EUROPÄISCHE PATENTSCHRIFT

(11) **EP 3 662 737 B1**
(45) Veröffentlichungstag und Bekanntmachung des Hinweises auf die Patenterteilung: **25.05.2022**
(21) Anmeldenummer: 19202914.8
(22) Anmeldetag: 14.10.2019
(51) Int. Cl.: A01D 41/12

(54) **SELBSTFAHRENDER MÄHDRESCHER**
SELF-PROPELLED COMBINE HARVESTER
MOISSONNEUSE-BATTEUSE AUTOMOTRICE

(30) Priorität: 07.12.2018 DE 102018131430
(43) Veröffentlichungstag der Anmeldung: 10.06.2020
(73) Patentinhaber: CLAAS Selbstfahrende Erntemaschinen GmbH, 33428 Harsewinkel (DE)
(72) Erfinder: Kersten, Johannes, 49176 Hilter a. TW (DE); Diekamp, Andreas, 49176 Hilter (DE); Schwarz, Michael, 33378 Rheda-Wiedenbrück (DE); Vieregge, Christopher, 32694 Dörentrup (DE); Baumgarten, Joachim, 48361 Beelen (DE); Kemner, Sascha, 48336 Sassenberg (DE); Weiß, Stefan, 59510 Lippetal (DE); Brandt, Jörg, 33428 Harsewinkel (DE)
(74) Vertreter: CLAAS Gruppe

(56) Entgegenhaltungen:
- EP-A1- 1 321 023
- EP-A1- 3 662 738
- EP-A2- 1 790 208
- US-A1- 2009 113 867
- US-A1- 2016 106 040

## Beschreibung

Die vorliegende Erfindung betrifft einen selbstfahrenden Mähdrescher, umfassend eine Dreschvorrichtung, eine Abscheidevorrichtung, eine Reinigungsvorrichtung, der eine Sauggebläseanordnung mit zumindest einem Gehäuse, zumindest einer Eintrittsöffnung und zumindest einer Austrittsöffnung nachgeordnet ist, eine Häckselvorrichtung und zumindest eine Verteilvorrichtung zur Annahme und Ausbringung eines die Häckselvorrichtung durchlaufenden Gutstroms.

Aus der EP 1 790 208 A2 ist ein selbstfahrender Mähdrescher der eingangs genannten Art bekannt. Der Mähdrescher, umfasst eine Dreschvorrichtung, eine Abscheidevorrichtung, eine Reinigungsvorrichtung, der eine Sauggebläseanordnung mit zumindest einem Gehäuse, zumindest einer Eintrittsöffnung und zumindest einer Austrittsöffnung nachgeordnet ist, eine Häckselvorrichtung sowie zumindest eine Verteilvorrichtung zur Annahme und Ausbringung eines die Häckselvorrichtung durchlaufenden Gutstroms. Die Sauggebläseanordnung ist als Reinigungsgebläse der Reinigungsvorrichtung ausgebildet und dient dazu, einen im Wesentlichen aus Nichtkornbestandteilen bestehenden Gutstrom aus Kurzstroh, Spreu und dergleichen aus einem Maschinengehäuse des Mähdreschers heraus zu fördern und an eine Verteilvorrichtung zu übergeben, welche den Gutstrom über eine Verteilbreite auf dem Feldboden verteilt. Die Häckselvorrichtung dient dazu, den im Wesentlichen aus Stroh bestehenden, von der Abscheidevorrichtung kommenden Gutstrom zu zerkleinern. Die der Verteilvorrichtung zugeführten Gutströme werden von der Häckselvorrichtung und von der Sauggebläseanordnung jeweils beschleunigt, bevor diese in der Verteilvorrichtung vor der Verteilung miteinander vermischt werden. Diese Durchmischung der unterschiedlichen, beschleunigten Gutströme kann die Qualität der Verteilung und die Verteilbreite beeinflussen.

Ausgehend vom vorstehend genannten Stand der Technik liegt der Erfindung die Aufgabe zugrunde, einen selbstfahrenden Mähdrescher der eingangs genannten Art weiterzubilden, der sich durch eine verbesserte Verteilung der an die Verteilvorrichtung übergebenen Gutströme auszeichnet.

Diese Aufgabe wird erfindungsgemäß durch die Merkmale des Anspruchs 1 gelöst. Vorteilhafte Weiterbildungen sind Gegenstand der Unteransprüche.

Es wird ein selbstfahrender Mähdrescher, umfassend eine Dreschvorrichtung, eine Abscheidevorrichtung, eine Reinigungsvorrichtung, der eine Sauggebläseanordnung mit zumindest einem Gehäuse, zumindest einer Eintrittsöffnung und zumindest einer Austrittsöffnung nachgeordnet ist, eine Häckselvorrichtung sowie zumindest eine Verteilvorrichtung zur Annahme und Ausbringung eines die Häckselvorrichtung durchlaufenden Gutstroms, vorgeschlagen, wobei die zumindest eine Eintrittsöffnung der Sauggebläseanordnung der Reinigungsvorrichtung zugewandt und die zumindest eine Austrittsöffnung der Sauggebläseanordnung unterhalb der Häckselvorrichtung positioniert ist, so dass eine Übergabe eines von der Sauggebläseanordnung durch die zumindest eine Eintrittsöffnung angesaugten Luft- und Gutstroms an die Verteilvorrichtung in einem unteren Bereich der Verteilvorrichtung erfolgt, wobei die Verteilvorrichtung in einem oberen Bereich den die Häckselvorrichtung durchlaufenden Gutstrom und in dem unteren Bereich den Luft- und Gutstrom in radialer Richtung ausbringt. Der von der Häckselvorrichtung kommende Gutstrom wird durch den von der Sauggebläseanordnung kommenden Luft- und Gutstrom erst beim Austreten aus der Verteilvorrichtung unterstützt und beschleunigt. Dies hat den Effekt, dass der durch die Häckselvorrichtung zerkleinerte Gutstrom beim Austritt aus der Verteilvorrichtung auf dem Luft- und Gutstrom der Sauggebläseanordnung schwebt und somit eine größere Wurfweite bzw. Verteilbreite erzielt wird. Zudem generiert die Sauggebläseanordnung einen intensiveren Luftstrom als ein konventionelles, vor der Reinigungsvorrichtung angeordnetes Druckgebläse, sodass ein höherer Anteil von Beimengungen und Staub aus dem Mähdrescher abführt werden kann. Bevorzugt kann die Verteilvorrichtung als Radialverteiler ausgebildet sein.

Der untere Bereich der Verteilvorrichtung ist von dem oberen Bereich räumlich separiert .

Bevorzugt ist ein plattenförmiges Element vorgesehen, welches den oberen Bereich der Verteilvorrichtung, welchem der von der Häckselvorrichtung kommende Gutstrom zugeführt wird, von dem unteren Bereich der Verteilvorrichtung räumlich trennt, welchem der von der Sauggebläseanordnung kommende Luft- und Gutstrom zugeführt wird.

Insbesondere kann in dem zumindest einen Gehäuse der Sauggebläseanordnung zumindest ein Läufer um eine vertikale Achse rotierend angeordnet sein, wobei die zumindest eine Eintrittsöffnung in einer zu der vertikalen Achse im Wesentlichen koaxialen Ebene ausgebildet ist und die zumindest eine Austrittsöffnung in einer zu der vertikalen Achse im Wesentlichen parallelen Ebene. Die Annahme des von dem zumindest einen Läufer angesaugten Luft- und Gutstromes in das zumindest eine Gehäuse erfolgt dabei von oben, d.h. im Wesentlichen parallel zur vertikalen Achse. Die Abgabe des Luft- und Gutstromes erfolgt durch die zumindest eine Austrittsöffnung, die derart positioniert ist, dass ein annähernd tangentialer Übergang des Luft- und Gutstromes von der zumindest einen Austrittsöffnung in die Verteilvorrichtung erfolgt.

Gemäß einer vorteilhaften Weiterbildung kann die zumindest eine Eintrittsöffnung als ein zylindrischer Abschnitt oberhalb des den Läufer umgebenden Gehäuses ausgebildet sein, wobei in dem zylindrischen Abschnitt Schneidelemente an einer um die vertikale Achse rotierende Welle angeordnet sind. Die Schneidelemente können die Nichtkornbestandteile im Luft- und Gutstrom im Freischnitt zerkleinern. Hierzu können die Schneidelemente als Messer oder Schneidfäden ausgeführt sein. Mittels der Schneidelemente können Überlängen im Stroh beseitigt werden, welche von der Dreschvorrichtung sowie der Abscheidevorrichtung kommend die Reinigungsvorrichtung erreichen. Aufgrund der im Wesentlichen vertikalen Zuführung in den zylindrischen Abschnitt können die Überlängen durch die Luftströmung bereits passend ausgerichtet werden. Somit lässt sich eine Erhöhung des Zerkleinerungsgrades des Reinigungsabganges erreichen. Weiterhin können Verluste von Nichtkornbestandteilen beim Übergang in die Verteilvorrichtung reduziert werden. Zudem kann durch die Schneidelemente eine verbesserte Feldhygiene erreicht werden, indem Unkrautsamen und Verlustkörner zerstört werden. Dies hat eine Verringerung des Einsatzes von Spritzmitteln sowie einen geringeren Aufwand bei der Bodenbearbeitung zur Unkrautreduzierung zur Folge.

Eine Verbesserung der Zerstörung von Unkrautsamen und Verlustkörner kann dadurch erreicht werde, dass an der Innenseite des den Läufer umgebenden Gehäuses mehrere Prallbleche angeordnet sind. Die Prallbleche können bis in den Bereich der Austrittsöffnung angeordnet sein. Bevorzugt können die Prallbleche schwenkbar an der Innenseite des Gehäuses angelenkt sein. Zumindest die Prallbleche im Bereich der Austrittsöffnung sind entnehmbar, um bei kritischen Erntebedingungen einem Gutstau vorbeugen zu können.

Weiterhin können in dem zylindrischen Abschnitt den Schneidelementen gegenüberliegende Gegenmesser angeordnet sein. Dadurch lässt sich der Zerkleinerungsgrad des Reinigungsabganges erhöhen, was zu einer weiteren Verbesserung der Feldhygiene beiträgt.

Gemäß einer bevorzugten Weiterbildung kann die Sauggebläseanordnung mittels einer Hebelanordnung aus ihrer Betriebsposition, in der die Übergabe des von der Sauggebläseanordnung bereitgestellten Luft- und Gutstroms an die Verteilvorrichtung erfolgt, in eine Transportposition überführbar sein, in welcher sich die Sauggebläseanordnung in einer Position unterhalb der Abscheidevorrichtung und oberhalb der Reinigungsvorrichtung befindet.

Bevorzugt kann die zumindest eine Austrittsöffnung der Sauggebläseanordnung mit einer Zuführöffnung der Verteilvorrichtung durch zumindest ein Kanalsegment verbunden sein, wobei das Kanalsegment einen Bypass aufweisen kann, welcher den Luftstrom teilweise an der Verteilvorrichtung vorbeileitet. Durch eine entsprechende Ausgestaltung des zumindest einen Kanalsegments lässt sich der von der Sauggebläseanordnung an die Verteilvorrichtung abgegebene Luft- und Gutstrom weitgehend in einem Annahmepunkt zentrieren oder über die gesamte Breite der Verteilvorrichtung zuführen. Mittels des Bypasses in dem zumindest einen Kanalsegment kann ein Teil des Luftstromes radial nach außen abgeleitet werden. Hierdurch kann eine Reduzierung der Luftmenge erreicht werden, die der Verteilvorrichtung zugeführt wird, was zu einer geringeren Belastung der Verteilvorrichtung führt.

Des Weiteren kann die Sauggebläseanordnung Luft im Wesentlichen durch einen vor der Reinigungsvorrichtung befindlichen Ansaugbereich ansaugen, wobei im Ansaugbereich wenigstens ein Luftleitelement angeordnet ist. Das wenigstens eine Luftleitelement kann dazu dienen, einen Teilluftstrom in Richtung einer unterhalb der Reinigungsvorrichtung angeordneten Kornförderschnecke umzulenken. Mittels der Kornförderschnecke wird das Korn, welches die Reinigungsvorrichtung passiert hat, einer Fördervorrichtung zugeführt, die das gereinigte Korn in einem Korntank des Mähdreschers fördert. Die Umlenkung des Teilluftstroms in Richtung der Kornförderschnecke bewirkt durch die durch Erhöhung des maximalen Schüttkegels einen höheren Druck auf die Kornförderschnecke, wodurch eine höhere Kornbergeleistung erreicht werden kann. Ein Herausrieseln von Körnern bei hohen Durchsätzen kann zumindest minimiert oder ganz vermieden werden.

Hierzu kann das wenigstens eine Luftleitelement als ein Leitblech und/oder als jalousieartig angeordnete, insbesondere verstellbare, Lamellen ausgeführt sein.

Im Allgemeinen sind die Dreschvorrichtung, die Abscheidevorrichtung, die Reinigungsvorrichtung, die Sauggebläseanordnung und die Häckselvorrichtung von einem Maschinengehäuse umgeben, wobei zumindest im Bereich der Dreschvorrichtung und der Abscheidevorrichtung Verschlusselemente angeordnet sind, welche der Umlenkung des von der Sauggebläseanordnung angesaugten Luftstroms im Inneren des Maschinengehäuses dienen. Mittels der Verschlusselemente kann der von der Sauggebläseanordnung generierte Luftstrom in der Weise umgeleitet werden, dass dieser gezielt kritische Baugruppen über- oder umströmt, um Ablagerungen zu beseitigen. So können durch die gezielte Umlenkung des Luftstroms beispielsweise Ablagerungen auf der als Trennrotor ausgebildeten Abscheidevorrichtung ohne zusätzlichen Arbeitsaufwand behoben werden. Bei einem Fruchtartwechsel lässt sich ein vereinfachtes Reinigen des Mähdreschers und dessen Arbeitsaggregate erreichen. Die Verschlusselemente können automatisch ansteuerbar sein. Auf diese Weise ließe sich ein Reinigungsprogramm für die Arbeitsaggregate des Mähdreschers ermöglichen.

Insbesondere kann sich zwischen einem unterhalb der Abscheidevorrichtung angeordneten Rücklaufboden und einem unterhalb der Dreschvorrichtung angeordneten Förderboden eine belüftete Fallstufe ausbilden. Die Sauggebläseanordnung kann Luft durch die unterhalb der Dreschvorrichtung angeordnete Steinfangmulde zwischen dem durch die zwischen dem Rücklaufboden und dem Förderboden ausgebildete Fallstufe ansaugen. Die zusätzliche Durchströmung sorgt für eine zusätzliche Entmischung des vom Rücklaufboden kommenden Gutstroms und trägt Spreu nach hinten aus dem Mähdrescher aus.

Gemäß einer bevorzugten Ausführung kann im Bereich der zumindest einen Austrittsöffnung der Sauggebläseanordnung wenigstens ein Verlustsensor angeordnet sein. Der wenigstens eine Verlustsensor kann als Kopfsensor ausgeführt sein. Die der Reinigungsvorrichtung nachgeordnete Positionierung der als Reinigungsgebläse ausgeführten Sauggebläseanordnung hat den Vorteil, dass mit dem Luftstrom ausgetragene oder von der Reinigungsvorrichtung abgeförderte Verlustkörner von der Sauggebläseanordnung angesaugt werden und diese passieren. Durch die Anordnung des wenigstens einen Verlustsensors im Bereich der zumindest einen Austrittsöffnung lässt sich die Genauigkeit der Erfassung gegenüber einer konventionellen Anordnung von Verlustsensoren am Ende eines Siebes der Reinigungsvorrichtung erhöhen.

Weiterhin kann im Bereich der zumindest einen Austrittsöffnung der Sauggebläseanordnung ein Radarsensor angeordnet sein. Mittels des Radarsensors lässt sich die Geschwindigkeit des Gutstroms, insbesondere der Spreu, bestimmen.

Des Weiteren kann im Bereich der zumindest einen Austrittsöffnung der Sauggebläseanordnung eine Prallplatte mit Wiegezelle angeordnet sein. In Verbindung mit der Geschwindigkeitsbestimmung durch den Radarsensor lässt sich der Gutdurchsatz bestimmen.

Vorzugsweise kann die Sauggebläseanordnung dazu eingerichtet sein, mit dem Luftstrom angesaugte Spreu zu separieren und auf ein Transportfahrzeug zu überladen. Dabei kann die Spreu mittels der Luftströmung direkt auf das Transportfahrzeug werden. Denkbar ist es aber auch, die separierte Spreu einer Fördervorrichtung, beispielsweise einer Förderschnecke, zuzuführen, mit welcher die Spreu auf das Transportfahrzeug überladen wird.

Insbesondere kann die die Verteilvorrichtung als Radialverteiler ausgebildet sein.

Die vorliegende Erfindung wird nachstehend anhand eines in den Zeichnungen dargestellten Ausführungsbeispieles näher erläutert.

Es zeigen:
- Fig. 1: eine schematische Darstellung eines Mähdreschers in einer Teilansicht;
- Fig. 2: schematisch eine Seitenansicht einer Sauggebläseanordnung, einer Häckselvorrichtung und einer Verteilvorrichtung;
- Fig. 3: schematisch eine perspektivische Ansicht der Sauggebläseanordnung;
- Fig. 4: schematisch eine Ansicht der Sauggebläseanordnung von unten;
- Fig. 5: schematisch eine Teilschnittansicht eines Gehäuses der Sauggebläseanordnung;
- Fig. 6: schematisch eine Querschnittansicht eines Gehäuses der Sauggebläseanordnung gemäß Fig. 5;
- Fig. 7: schematisch eine perspektivische Ansicht der Sauggebläseanordnung mit einem teilweise dargestellten Läufer und einem eingehausten Läufer;
- Fig. 8: schematisch eine perspektivische Ansicht eines Gehäuses der Sauggebläseanordnung;
- Fig. 9: schematisch eine Teilansicht von Förderboden und Reinigungsvorrichtung mit Luftleitelementen; und
- Fig. 10: schematisch eine Teilansicht von Förderboden und Reinigungsvorrichtung mit Luftleitelementen gemäß einer zweiten Ausführungsform.

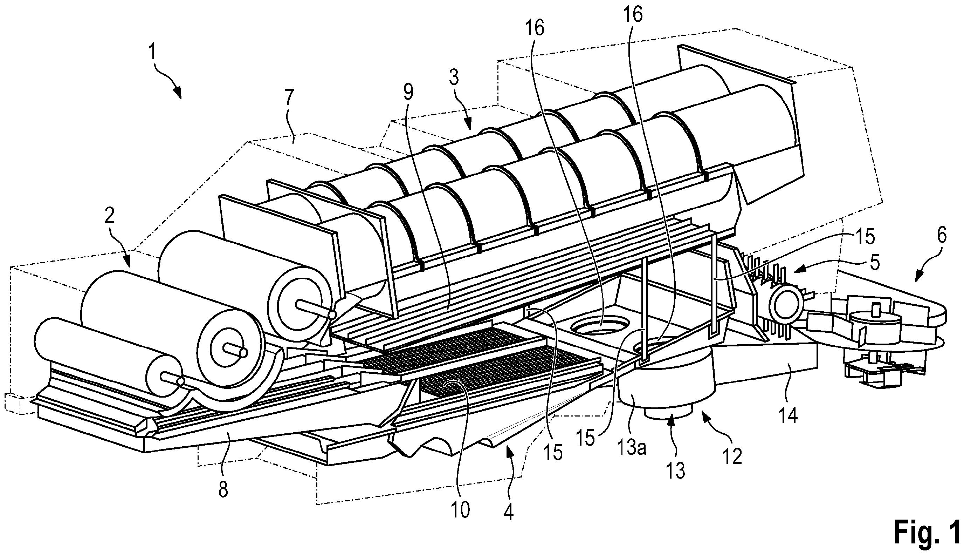

In Fig. 1 ist eine schematische Darstellung eines Mähdreschers 1 in einer Teilansicht gezeigt. Der Mähdrescher 1 umfasst eine Dreschvorrichtung 2, die als ein Mehrtrommeldreschwerk ausgeführt ist, eine Abscheidevorrichtung 3, die im dargestellten Ausführungsbeispiel als Trennrotoren ausgeführt ist, eine Reinigungsvorrichtung 4, eine Häckselvorrichtung 5 sowie eine Verteilvorrichtung 6, die als Radialverteiler ausgeführt ist. Die Dreschvorrichtung 2, die Abscheidevorrichtung 3, die Reinigungsvorrichtung 4 sowie die Häckselvorrichtung 5 sind von einem Maschinengehäuse 7 umgeben. Die Verteilvorrichtung 6 ist außenseitig an dem Maschinengehäuse 7 angeordnet. Unterhalb der Dreschvorrichtung 2 ist ein oszillierend angetriebener Förderboden 8 angeordnet. Unterhalb der Abscheidevorrichtung 3 ist ein Rücklaufboden 9 angeordnet ist. Die Reinigungsvorrichtung 4 umfasst ein Obersieb 10 und ein Untersieb 11. Der Reinigungsvorrichtung 4 ist eine Sauggebläseanordnung 12 nachgeordnet, die als Reinigungsgebläse dient.

Die Sauggebläseanordnung 12 weist zumindest ein Gehäuse 13 auf. Das zumindest eine zylindrisch geformte Gehäuse 13 umfasst eine Seitenwand 13a sowie einen Boden 13b und einen Deckel 13c. An das zumindest eine Gehäuse 13 schließt sich ein Kanalsegment 14 an, welches die Sauggebläseanordnung 12 mit der Verteilvorrichtung 6 verbindet. Die Sauggebläseanordnung 12 saugt einen Luft- und Gutstrom, der im Wesentlichen im Bereich der Dreschvorrichtung 2 sowie der Reinigungsvorrichtung 4 zugeführt wird, an und leitet diesen durch das Kanalsegment 14 an die Verteilvorrichtung 6 weiter.

Das zumindest eine Gehäuse 13 der Sauggebläseanordnung 12 ist mittels einer Hebelanordnung 15 aus ihrer Betriebsposition, in der die Übergabe des von der Sauggebläseanordnung 12 bereitgestellten Luft- und Gutstroms an die Verteilvorrichtung 6 erfolgt, in eine Transportposition überführbar sein, in welcher sich die Sauggebläseanordnung 12 in einer Position unterhalb der Abscheidevorrichtung 3 und oberhalb der Reinigungsvorrichtung 4 befindet. Die Sauggebläseanordnung 12 weist zwei Eintrittsöffnungen 16 auf, von denen in Fig. 1 nur eine sichtbar ist. Die Eintrittsöffnungen 16 sind der Reinigungsvorrichtung zugewandt angeordnet.

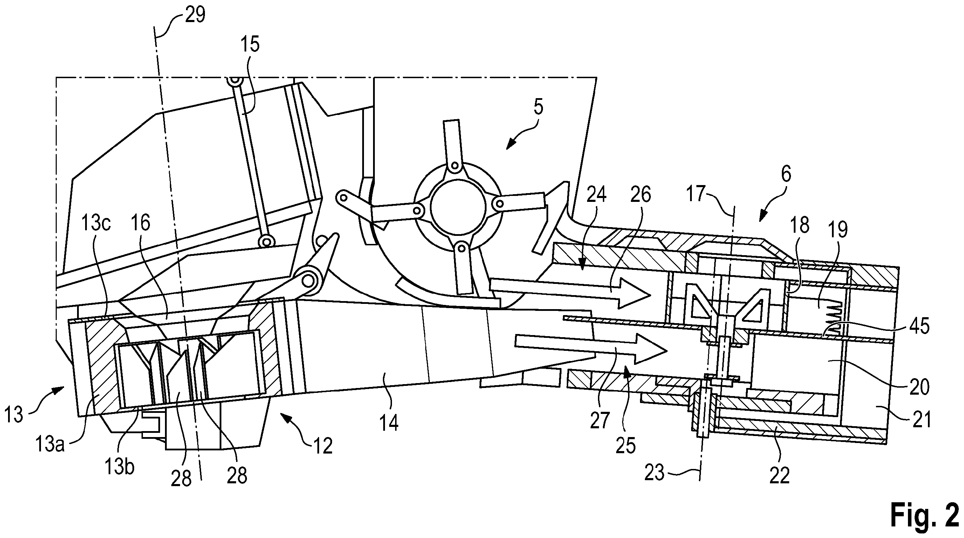

In Fig. 2 ist schematisch eine Seitenansicht der Sauggebläseanordnung 12, der Häckselvorrichtung 5 und der Verteilvorrichtung 6 dargestellt. In dem Gehäuse 13 ist zumindest ein Läufer 28 mittels einer angetriebenen Welle 34 um eine vertikale Achse 29 rotierend angeordnet. Der zumindest eine Läufer 28 ist vorzugsweise hydraulisch angetrieben. Alternative Antriebsformen, beispielsweise durch einen Elektromotor oder mittels Riementrieb, sind denkbar.

Die als Radialverteiler ausgebildete Verteilvorrichtung 6 umfasst zwei jeweils einen um eine vertikale orientierte Drehachse 17 rotierenden Läufer 18. An den Läufern 18 sind in Umfangsrichtung verteilt paddelförmige Förderelemente 19 angeordnet. Die Läufer 18 sind in Umfangsrichtung abschnittsweise von einer Mantelfläche 20 umschlossen. Zur Steuerung der Verteilbreite weist die Verteilvorrichtung 6 jeweils ein in Umfangsrichtung der Läufer 18 verstellbares Streubleche 21 auf, das jeweils an einem Hebelarm 22 angeordnet ist. Der jeweilige Hebelarm 22 ist durch eine Aktorik um eine zu der Drehachse 17 achsparallel angeordnete Schwenkachse 23 pendelnd bewegbar. Der Antrieb der Läufer 18 der Verteilvorrichtung 6 erfolgt gegensinnig.

Die Verteilvorrichtung 6 ist in einen oberen Bereich 24 und einen unteren Bereich 25 unterteilt. Die Verteilvorrichtung 6 bringt in dem oberen Bereich 24 einen die Häckselvorrichtung 5 durchlaufenden Gutstrom 26, der im Wesentlichen aus zerkleinertem Stroh besteht, und in dem von dem oberen Bereich 24 räumlich separierten unteren Bereich 25 einen von der Sauggebläseanordnung 12 bereitgestellten Luft- und Gutstrom 26, der im Wesentlichen Spreu, Kurzstroh und dergleichen enthält, in radialer Richtung aus. Die räumliche Separierung des oberen Bereichs 24 von dem unteren Bereich 25 erfolgt durch ein plattenförmiges Element 45, welches unterhalb des jeweiligen Läufers 18 der Verteilvorrichtung 6 angeordnet ist.

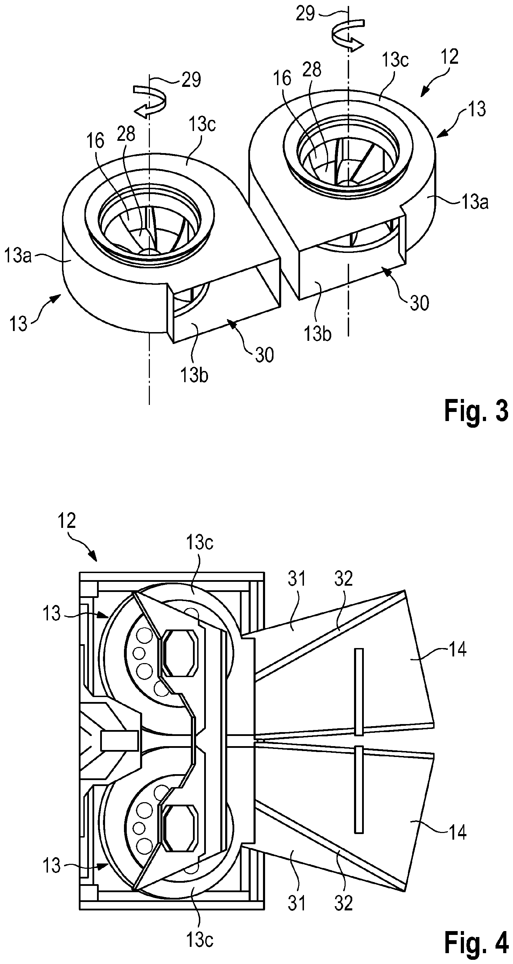

Fig. 3 zeigt schematisch eine perspektivische Ansicht der Sauggebläseanordnung 12. Die Sauggebläseanordnung 12 weist in dem dargestellten Ausführungsbeispiel zwei Gehäuse 13 mit jeweils einem darin angeordneten Läufer 28 auf, der um die vertikale Ache 29 rotiert. Die jeweilige Eintrittsöffnung 16 des Gehäuses 13 ist in einer zur vertikalen Achse 29 koaxialen Ebene ausgebildet. Eine jeweilige Austrittsöffnung 30 des Gehäuses 13 ist in einer zu der vertikalen Achse 29 parallelen Ebene ausgebildet. In dem Gehäuse 13 findet eine Umlenkung vertikal angesaugten des Luft- und Gutstroms 26 um etwa 90° statt, so dass der Luft- und Gutstrom 26 in radialer Richtung aus der Austrittsöffnung 30 austritt.

Wie weiter oben bereits ausgeführt, schließt sich an die jeweilige Austrittsöffnung 30 des Gehäuses 13 ein Kanalsegment 14. Das Kanalsegment 14 kann an seiner Unterseite offen ausgeführt sein. Durch das Kanalsegment 14 ist die jeweilige Austrittsöffnung 30 der Sauggebläseanordnung 12 mit einer Zuführöffnung der Verteilvorrichtung 6 verbunden. Das Kanalsegment 14 weist einen Bypass 31 auf, welcher den aus der Austrittsöffnung 30 austretenden Luftstrom 26 teilweise seitlich an der Zuführöffnung der Verteilvorrichtung 6 vorbeileitet. Der Bypass 31 ist als Leitbleche 32 ausgebildet, die senkrecht zur Oberseite des Kanalsegment 14 verlaufend an diesem angeordnet sind.

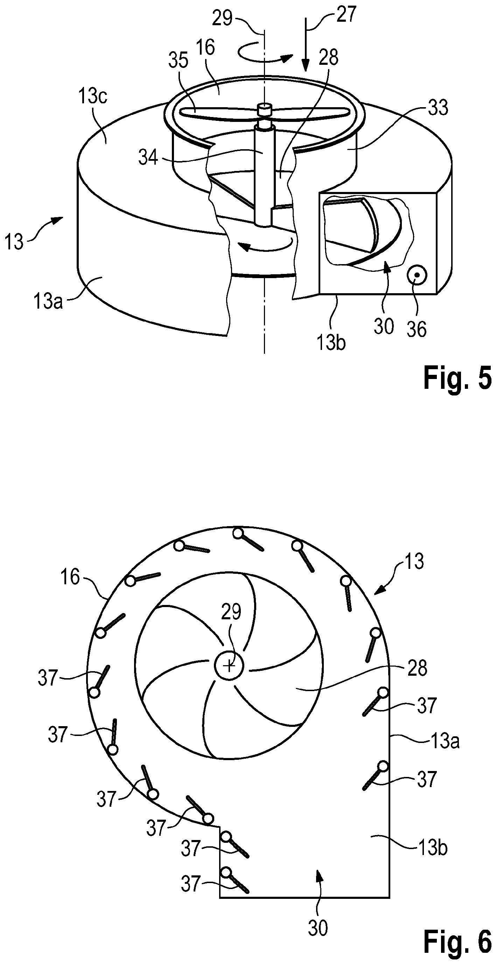

Die Darstellung in Fig. 5 zeigt schematisch eine Teilschnittansicht des Gehäuses 13 der Sauggebläseanordnung 12. Die Eintrittsöffnung 16 ist als ein zylindrischer Abschnitt 33 oberhalb des den Läufer 28 umgebenden Gehäuses 13 ausgebildet ist. Der zylindrische Abschnitt 33 ist koaxial zu der vertikalen Achse 29 angeordnet. In dem zylindrischen Abschnitt 33 können im Bereich der Eintrittsöffnung 16 Schneidelemente 35 an der Welle 34 angeordnet sein. Mittels der Schneidelemente 35 können Gutbestandteile, insbesondere Stroh oder Spreu, die in dem durch die Eintrittsöffnung 16 angesaugten Luft- und Gutstrom 27 enthalten sind, zerkleinert werden. Die Schneidelemente 35 können als Messer oder Schneidfäden ausgeführt sein. Die Anordnung an der Schneidelemente 35 an der Welle 34 hat den Vorteil, dass ein zusätzlicher Antrieb für die Schneidelemente 35 nicht erforderlich ist. An dem Gehäuse 13 kann ein Druckluftanschluss 36 vorgesehen sein, um die Sauggebläseanordnung 12 zu reinigen. Eine bevorzugte Weiterbildung sieht vor, dass an dem zylindrischen Abschnitt 33 innenseitig zusätzlich Gegenmesser angeordnet sein können.

Fig. 6 zeigt schematisch eine Querschnittansicht des Gehäuses 13 der Sauggebläseanordnung 12 gemäß Fig. 5. Im Inneren des Gehäuses 13 können in Umfangsrichtung des Läufers 28 verteilt Prallbleche 37 angeordnet sein. Die Prallbleche 37 können bis in den Bereich der Austrittsöffnung 30 angeordnet sein. Bevorzugt können die Prallbleche 37 schwenkbar an der Innenseite des Gehäuses 13 angelenkt sein. Dies ermöglicht es, die Prallbleche unterschiedlich einzustellen, um die Aggressivität des Einwirkens auf die Körner im Luft- und Gutstrom 27 zu variieren. Damit ist das Verhältnis von Kornzerstörung und Energiebedarf der Sauggebläseanordnung 12 einstellbar. Zumindest die Prallbleche 37 im Bereich der Austrittsöffnung 30 sind entnehmbar, um bei kritischen Erntebedingungen einem Gutstau vorbeugen zu können.

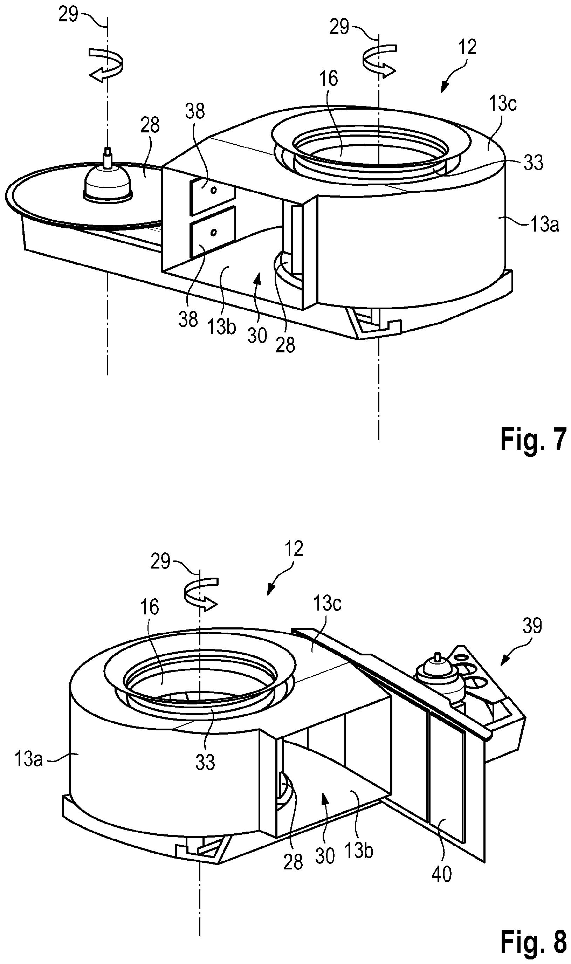

In Fig. 7 ist schematisch eine perspektivische Ansicht der Sauggebläseanordnung 12 mit einem teilweise dargestellten Läufer 28 und einem eingehausten Läufer 28 dargestellt. Im Bereich der Austrittsöffnung 30 kann an der Seitenwand 13a des Gehäuses 13, die der Führung des Luft- und Gutstromes 27 dient, zumindest ein Kornverlustsensor 38 angeordnet sein. Der Kornverlustsensor 38 ist als sogenannter Klopfsensor ausgebildet. Der Kornverlustsensor 38 ist dazu geeignet, die Anzahl auf ihn treffender Körner anhand von beim Auftreffen erzeugter Schallimpulsen zu bestimmen und auf diese Weise in Kenntnis des gesamten ausgetragenen Materialstroms den Kornanteil zu ermitteln. Bei einer konventionellen Anordnung von Verlustsensoren am Ende der Siebe der Reinigungsvorrichtung 4 werden nicht alle Körner erfasst, da ein Teil mit dem Druckwind über die Reinigungsvorrichtung hinweg ausgetragen und somit nicht erfasst werden. Hingegen hat die Anordnung des zumindest einen Kornverlustsensors 38 im Gehäuse 13 der Sauggebläseanordnung 12 den Vorteil, dass alle Verlustkörner das zumindest eine Gehäuse 13 passieren müssen, so dass die Verlustkörner dort erfasst werden.

Die Darstellung in Fig. 8 zeigt schematisch eine perspektivische Ansicht des Gehäuses 13 der Sauggebläseanordnung 12 mit einer Sensoranordnung 39 zur Bestimmung des Gutdurchsatzes. Zusätzlich zu dem Kornverlustsensors 38 oder alternativ kann die Sensoranordnung 39 im Bereich der Austrittsöffnung 30 an der Seitenwand 13a bzw. dem sich daran anschließenden Kanalsegment 14 angeordnet sein. Der Gutanteil im Luft- und Gutstrom 27 wird aufgrund der Fliehkräfte nach außen gegen die Seitenwand 13a gepresst und liegt in Form einer Gutmatte an dieser an. Die Sensoranordnung 39 umfasst eine Prallplatte 40, die mit einer Wiegezelle verbunden ist sowie einen Radarsensor zur Bestimmung der Geschwindigkeit der Gutmatte. Aus den ermittelten Daten lässt sich der Gutdurchsatz ermitteln und der Mähdrescher kann danach eingestellt werden.

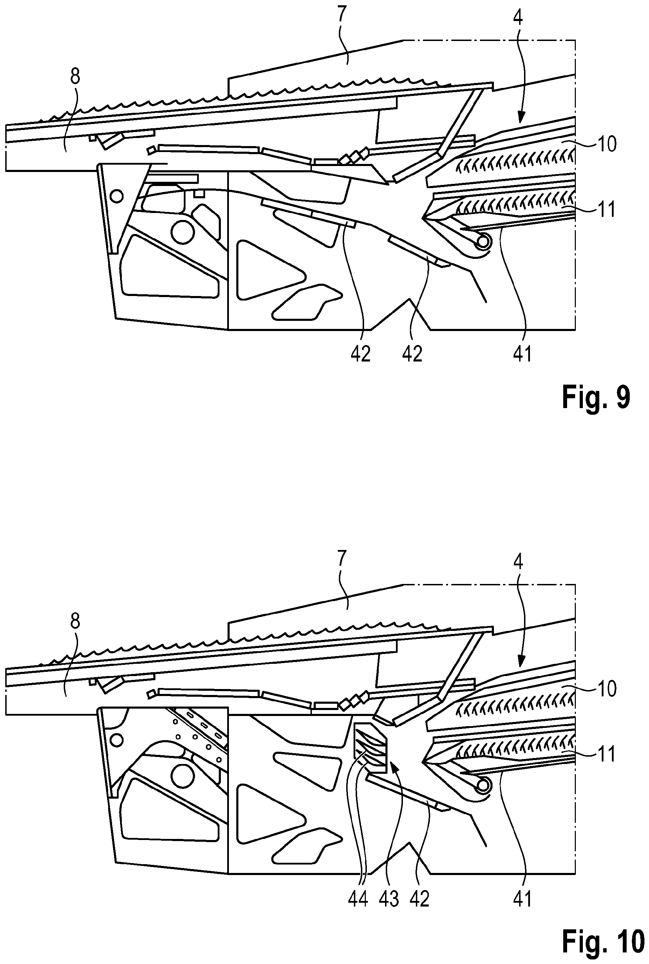

Fig. 9 zeigt schematisch eine Teilansicht des Förderbodens 8 und der Reinigungsvorrichtung 4. Körner, welche durch beide Siebe 10, 11 der Reinigungsvorrichtung 4 gelangen, fallen auf einen schräg verlaufenden Auffang- und Führungsboden 41 und gleiten in eine - nicht dargestellte - Kornförderschnecke, welche die Körner der Fördervorrichtung zuführt, mittels der das Korn in den Korntank gefördert wird. Unterhalb des Förderbodens 8 bzw. des Siebes 11 ist zumindest ein Luftleitelement 42 im Ansaugbereich angeordnet, welches den von der Sauggebläseanordnung 12 erzeugten Saugwind anteilig auf die Kornförderschnecke umlenken. Das zumindest eine Luftleitelement 42 ist in Längsrichtung des Mähdreschers geneigt angeordnet. Das zumindest eine Luftleitelement 42 ist als ein Leitblech ausgeführt, welches sich zumindest über die Breite des Ansaugbereiches erstreckt.

In Fig. 10 ist schematisch eine Teilansicht von Förderboden 8 und Reinigungsvorrichtung 4 mit Luftleitelementen 42, 43 gemäß einer zweiten Ausführungsform dargestellt. Neben dem als Leitblech ausgeführten Luftleitelement 42 kann ein weiteres jalousieartig ausgeführtes Luftleitelement 43 vorgesehen sein. Das Luftleitelement 43 weist eine im Wesentlichen vertikale Orientierung auf. Es umfasst mehrere im Wesentlichen parallel zueinander angeordnete Lamellen 44. Die Neigung der Lamellen 44 ist verstellbar.

Durch die Anordnung von zumindest einem Luftleitelement 42, 43 kann eine Erhöhung des maximalen Schüttkegels erreicht werden, so dass von dem Korn mehr Druck auf die Kornschnecke ausgeübt wird. Hierdurch lässt sich eine höhere Kornbergeleistung erreichen sowie das Herausrieseln der Körner bei hohen Durchsätzen minimieren oder vermeiden.

Der von der Häckselvorrichtung 5 kommende Gutstrom 26 wird durch den von der Sauggebläseanordnung 12 kommenden Luft- und Gutstrom 27 erst beim Austreten aus der Verteilvorrichtung 6 unterstützt und beschleunigt. Dies hat den Effekt, dass der durch die Häckselvorrichtung 5 zerkleinerte Gutstrom 26 beim Austritt aus der Verteilvorrichtung 6 auf dem Luft- und Gutstrom 27 der Sauggebläseanordnung 12 schwebt und somit eine größere Wurfweite bzw. Verteilbreite erzielt wird. Zudem generiert die Sauggebläseanordnung 12 einen intensiven Luftstrom, sodass ein höherer Anteil von Beimengungen und Staub aus dem Mähdrescher abführt werden kann.

Insbesondere kann sich zwischen einem unterhalb der Abscheidevorrichtung 3 angeordneten Rücklaufboden 9 und einem unterhalb der Dreschvorrichtung 2 angeordneten Förderboden 8 eine belüftete Fallstufe ausbilden. Die Sauggebläseanordnung 12 kann Luft durch die unterhalb der Dreschvorrichtung 2 angeordnete Steinfangmulde zwischen dem durch die zwischen dem Rücklaufboden 9 und dem Förderboden 8 ausgebildete Fallstufe ansaugen. Die zusätzliche Durchströmung sorgt für eine zusätzliche Entmischung des vom Rücklaufboden 9 kommenden Gutstroms und trägt Spreu nach hinten aus dem Mähdrescher 1 aus.

**Bezugszeichenliste**

| | | | |
|---|---|---|---|
| 1 | Mähdrescher | 28 | Läufer |
| 2 | Dreschvorrichtung | 29 | Vertikale Achse |
| 3 | Abscheidevorrichtung | 30 | Austrittsöffnung |
| 4 | Reinigungsvorrichtung | 31 | Bypass |
| 5 | Häckselvorrichtung | 32 | Leitblech |
| 6 | Verteilvorrichtung | 33 | Zylindrischer Abschnitt |
| 7 | Maschinengehäuse | 34 | Welle |
| 8 | Förderboden | 35 | Schneidelement |
| 9 | Rücklaufboden | 36 | Druckluftanschluss |
| 10 | Obersieb | 37 | Prallblech |
| 11 | Untersieb | 38 | Kornverlustsensor |
| 12 | Sauggebläseanordnung | 39 | Sensoranordnung |
| 13 | Gehäuse | 40 | Prallplatte |
| 13a | Seitenwand | 41 | Auffang- und Führungsboden |
| 13b | Boden | 42 | Luftleitelement |
| 13c | Deckel | 43 | Luftleitelement |
| 14 | Kanalsegment | 44 | Lamelle |
| 15 | Hebelanordnung | 45 | Plattenförmiges Element |
| 16 | Eintrittsöffnung | | |
| 17 | Drehachse | | |
| 18 | Läufer | | |
| 19 | Förderelement | | |
| 20 | Mantelfläche | | |
| 21 | Streublech | | |
| 22 | Hebelarm | | |
| 23 | Schwenkachse | | |
| 24 | Oberer Bereich | | |
| 25 | Unterer Bereich | | |
| 26 | Gutstrom | | |
| 27 | Luft- und Gutstrom | | |

## Patentansprüche

1. Selbstfahrender Mähdrescher (1), umfassend eine Dreschvorrichtung (2), eine Abscheidevorrichtung (3), eine Reinigungsvorrichtung (4), der eine Sauggebläseanordnung (12) mit zumindest einem Gehäuse (13), zumindest einer Eintrittsöffnung (16) und zumindest einer Austrittsöffnung (30) nachgeordnet ist, eine Häckselvorrichtung (5) sowie zumindest eine Verteilvorrichtung (6) zur Annahme und Ausbringung eines die Häckselvorrichtung (5) durchlaufenden Gutstroms (26), wobei die zumindest eine Eintrittsöffnung (16) der Sauggebläseanordnung (12) der Reinigungsvorrichtung (4) zugewandt und die zumindest eine Austrittsöffnung (30) der Sauggebläseanordnung (12) unterhalb der Häckselvorrichtung (5) positioniert ist, **dadurch gekennzeichnet, dass** die Verteilvorrichtung einen unteren Bereich (25) und einen von dem unteren Bereich (25) räumlich separierten oberen Bereich (24) aufweist, so dass eine Übergabe eines von der Sauggebläseanordnung (12) durch die zumindest eine Eintrittsöffnung (16) angesaugten Luft- und Gutstroms (27) an die Verteilvorrichtung (6) in dem unteren Bereich (25) der Verteilvorrichtung (6) erfolgt, wobei die Verteilvorrichtung (6) in dem oberen Bereich (24) den die Häckselvorrichtung (5) durchlaufenden Gutstrom (26) und in dem unteren Bereich (25) den Luft- und Gutstrom (27) ausbringt.

2. Mähdrescher (1) nach Anspruch 1, **dadurch gekennzeichnet, dass** in dem zumindest einen Gehäuse (13) zumindest ein Läufer (28) um eine vertikale Achse (29) rotierend angeordnet ist, und dass die zumindest eine Eintrittsöffnung (16) in einer zu der vertikalen Achse (29) im Wesentlichen koaxialen Ebene ausgebildet ist und die zumindest eine Austrittsöffnung (30) in einer zu der vertikalen Achse (29) im Wesentlichen parallelen Ebene.

3. Mähdrescher (1) nach Anspruch 1, **dadurch gekennzeichnet, dass** die zumindest eine Eintrittsöffnung (30) als ein zylindrischer Abschnitt (33) oberhalb des den Läufer (28) umgebenden Gehäuses (13) ausgebildet ist, und dass im Bereich des zylindrischen Abschnitts (33) Schneidelemente (35) an einer um die vertikale Achse (29) rotierende Welle (34) angeordnet sind.

4. Mähdrescher (1) nach einem der Ansprüche 1 bis 3, **dadurch gekennzeichnet**, das an der Innenseite des den Läufer (28) umgebenden Gehäuses (13) mehrere Prallbleche (37) angeordnet sind

5. Mähdrescher (1) nach einem der Ansprüche 1 bis 4, **dadurch gekennzeichnet, dass** die Sauggebläseanordnung (12) mittels einer Hebelanordnung (15) aus ihrer Betriebsposition, in der die Übergabe des von der Sauggebläseanordnung (12) bereitgestellten Luft- und Gutstroms (27) an die Verteilvorrichtung (6) erfolgt, in eine Transportposition überführbar ist, in welcher sich die Sauggebläseanordnung (12) in einer Position unterhalb der Abscheidevorrichtung (3) und oberhalb der Reinigungsvorrichtung (4) befindet.

6. Mähdrescher (1) nach einem der Ansprüche 1 bis 5, **dadurch gekennzeichnet, dass** die zumindest eine Austrittsöffnung (30) der Sauggebläseanordnung (12) mit einer Zuführöffnung der Verteilvorrichtung (6) durch zumindest ein Kanalsegment (14) verbunden ist, wobei das Kanalsegment (14) einen Bypass (31) aufweisen kann, welcher den Luftstrom teilweise an der Verteilvorrichtung (6) vorbeileitet.

7. Mähdrescher (1) nach einem der Ansprüche 1 bis 6, **dadurch gekennzeichnet, dass** die Sauggebläseanordnung (12) Luft im Wesentlichen durch einen vor der Reinigungsvorrichtung (4) befindlichen Ansaugbereich ansaugt, wobei in dem Ansaugbereich wenigstens ein Luftleitelement (42, 43) angeordnet ist.

8. Mähdrescher (1) nach Anspruch 7, **dadurch gekennzeichnet, dass** das wenigstens eine Luftleitelement (42, 43) als ein Leitblech und/oder als jalousieartig angeordnete, insbesondere verstellbare, Lamellen (44) ausgeführt

9. Mähdrescher (1) nach einem der Ansprüche 1 bis 8, **dadurch gekennzeichnet, dass** die Dreschvorrichtung (2), die Abscheidevorrichtung (3), die Reinigungsvorrichtung (4), die Sauggebläseanordnung (12) und die Häckselvorrichtung (5) von einem Maschinengehäuse (7) umgeben sind, wobei zumindest im Bereich der Dreschvorrichtung (2) und der Abscheidevorrichtung (3) Verschlusselemente angeordnet sind, welche der Umlenkung des von der Sauggebläseanordnung (12) angesaugten Luftstroms im Inneren des Maschinengehäuses (7) dienen.

10. Mähdrescher (1) nach einem der Ansprüche 1 bis 9, **dadurch gekennzeichnet, dass** sich zwischen einem unterhalb der Abscheidevorrichtung (3) angeordneten Rücklaufboden (9) und einem unterhalb der Dreschvorrichtung (2) angeordneten Förderboden (8) eine belüftete Fallstufe ausbildet.

11. Mähdrescher (1) nach einem der Ansprüche 1 bis 10, **dadurch gekennzeichnet, dass** im Bereich der zumindest einen Austrittsöffnung (30) der Sauggebläseanordnung (12) wenigstens ein Verlustsensor (38) angeordnet ist.

12. Mähdrescher (1) nach einem der Ansprüche 1 bis 11, **dadurch gekennzeichnet, dass** im Bereich der zumindest einen Austrittsöffnung (30) der Sauggebläseanordnung (12) ein Radarsensor angeordnet ist.

13. Mähdrescher (1) nach einem der Ansprüche 1 bis 12, **dadurch gekennzeichnet, dass** im Bereich der zumindest einen Austrittsöffnung (30) der Sauggebläseanordnung (12) eine Wiegezelle angeordnet ist.

14. Mähdrescher (1) nach einem der Ansprüche 1 bis 13, **dadurch gekennzeichnet, dass** die Sauggebläseanordnung (12) dazu eingerichtet ist, mit dem Luftstrom angesaugte Spreu zu separieren und auf ein Transportfahrzeug zu überladen.

## Claims

1. a self-propelled combine harvester (1) comprising a threshing device (2), a separating device (3), a cleaning device (4) with a suction fan assembly (12) having at least one housing (13), at least one inlet opening (16) and at least one outlet opening (30) disposed downstream thereof, a chopping device (5) as well as at least one spreading device (6) for receiving and discharging a flow of material (26) passing through the chopping device (5), wherein the at least one inlet opening (16) of the suction fan assembly (12) faces the cleaning device (4) and the at least one outlet opening (30) of the suction fan assembly (12) is positioned beneath the chopping device (5), **characterized in that** the spreading device has a lower region (25) and an upper region (24) which is spatially separated from the lower region (25), so that a transfer of a flow of air and material (27) from the suction fan assembly (12) through the at least one inlet opening (16) to the spreading device (6) occurs in the lower region (25) of the spreading device (6), wherein in the upper region (24), the spreading device (6) discharges the flow of material (26) passing through the chopping device (5), and in the lower region (25), the flow of air and material (27) is discharged.

2. The combine harvester (1) according to claim 1, **characterized in that** at least one rotor (28) is rotatably disposed about a vertical axis (29) in the at least one housing (13), and **in that** the at least one inlet opening (16) is configured in a plane which is substantially coaxial with the vertical axis (29) and the at least one outlet opening (30) is in a plane which is substantially parallel to the vertical axis (29).

3. The combine harvester (1) according to claim 1, **characterized in that** the at least one inlet opening (16) is configured as a cylindrical section (33) above the housing (13) surrounding the rotor (28), and **in that** in the region of the cylindrical section (33), cutting elements (35) are disposed on a shaft (34) which rotates about the vertical axis (29).

4. The combine harvester (1) according to one of claims 1 to 3, **characterized in that** a plurality of deflector plates (37) are disposed on the inside of the housing (13) surrounding the rotor (28).

5. The combine harvester (1) according to one of claims 1 to 4, **characterized in that** the suction fan assembly (12) can be moved by means of a lever assembly (15) out of its operating position, in which the transfer of the flow of air and material (27) provided by the suction fan assembly (12) to the spreading device (6) is carried out, into a transport position in which the suction fan assembly (12) is in a position beneath the separating device (3) and above the cleaning device (4).

6. The combine harvester (1) according to one of claims 1 to 5, **characterized in that** the at least one outlet opening (30) of the suction fan assembly (12) is connected to an infeed opening of the spreading device (6) by means of at least one channel segment (14), wherein the channel segment (14) may have a bypass (31) which routes a portion of the flow of air past the spreading device (6).

7. The combine harvester (1) according to one of claims 1 to 6, **characterized in that** the suction fan assembly (12) sucks air substantially through an intake region located in front of the cleaning device (4), wherein at least one air control element (42, 43) is disposed in the intake region.

8. The combine harvester (1) according to claim 7, **characterized in that** the at least one air control element (42, 43) is configured as a guide plate and/or as louvre-like, in particular displaceable, slats (44).

9. The combine harvester (1) according to one of claims 1 to 8, **characterized in that** the threshing device (2), the separating device (3), the cleaning device (4), the suction fan assembly (12) and the chopping device (5) are enclosed by a machine housing (7), wherein at least in the region of the threshing device (2) and the separating device (3), occluding elements are disposed which act to deflect the flow of air sucked in by the suction fan assembly (12) into the interior of the machine housing (7).

10. The combine harvester (1) according to one of claims 1 to 9, **characterized in that** a ventilated drop step is formed between a returns pan (9) disposed beneath the separating device (3) and a grain pan (8) disposed beneath the threshing device (2).

11. The combine harvester (1) according to one of claims 1 to 10, **characterized in that** at least one loss sensor (38) is disposed in the region of the at least one outlet opening (30) of the suction fan assembly (12).

12. The combine harvester (1) according to one of claims 1 to 11, **characterized in that** a radar sensor is disposed in the region of the at least one outlet opening (30) of the suction fan assembly (12).

13. The combine harvester (1) according to one of claims 1 to 12, **characterized in that** a weighing cell is disposed in the region of the at least one outlet opening (30) of the suction fan assembly (12).

14. The combine harvester (1) according to one of claims 1 to 13, **characterized in that** the suction fan assembly (12) is constructed so as to separate chaff which has been sucked in with the flow of air and to transfer it over to a transport vehicle.

## Revendications

1. Moissonneuse-batteuse automotrice (1) comprenant : un dispositif batteur (2) ; un dispositif de séparation (3) ; un dispositif de nettoyage (4), à la suite duquel est prévu un système de soufflerie aspirante (12) comportant au moins un carter (13), au moins une ouverture d'entrée (16) et au moins une ouverture de sortie (30) ; un dispositif hacheur (5) et au moins un dispositif de répartition (6) destiné à recueillir et à évacuer un flux de produits (26) traversant le dispositif hacheur (5), dans laquelle
l'ouverture d'entrée (16), au nombre d'au moins une, du système de soufflerie aspirante (12) est tournée vers le dispositif de nettoyage (4), et l'ouverture de sortie (30), au nombre d'au moins une, du système de soufflerie aspirante (12) est placée sous le dispositif hacheur (5),
**caractérisée en ce que** le dispositif de répartition présente une partie inférieure (25) et une partie supérieure (24) qui est séparée dans l'espace de la partie inférieure (25), de manière à ce qu'un transfert d'un flux d'air et de produits (27) aspiré à travers l'ouverture d'entrée (16), au nombre d'au moins une, soit effectué vers le dispositif de répartition (6), dans la partie inférieure (25) du dispositif de répartition (6), le dispositif de répartition (6) évacuant, dans la partie supérieure (24), le flux de produits (26) traversant le dispositif hacheur (5), et dans la partie inférieure (25), le flux d'air et de produits (27).

2. Moissonneuse-batteuse (1) selon la revendication 1, **caractérisée en ce que** dans le carter (13), au nombre d'au moins un, il est prévu au moins un rotor (28) tournant autour d'un axe vertical (29), et **en ce que** l'ouverture d'entrée (16), au nombre d'au moins une, est réalisée dans un plan sensiblement coaxial avec l'axe vertical (29), et l'ouverture de sortie (30), au nombre d'au moins une, est réalisée dans un plan sensiblement parallèle à l'axe vertical (29).

3. Moissonneuse-batteuse (1) selon la revendication 1, **caractérisée en ce que** l'ouverture d'entrée (30), au nombre d'au moins une, est réalisée sous forme de partie cylindrique (33) au-dessus du carter (13) entourant le rotor (28), et **en ce que** dans la région de la partie cylindrique (33), des éléments de coupe (35) sont disposés sur un arbre (34) tournant autour de l'axe vertical (29).

4. Moissonneuse-batteuse (1) selon l'une des revendications 1 à 3, **caractérisée en ce que** plusieurs tôles déflectrices (37) sont disposées sur la face intérieure du carter (13) entourant le rotor (28).

5. Moissonneuse-batteuse (1) selon l'une des revendications 1 à 4, **caractérisée en ce que** le système de soufflerie aspirante (12) peut être amené au moyen d'un système de levier (15) de sa position de service, dans laquelle le flux d'air et de produits (27) fourni par le système de soufflerie aspirante (12) est transféré au dispositif de répartition (6), à une position de transport dans laquelle le système de soufflerie aspirante (12) se trouve dans une position située en dessous du dispositif de séparation (3) et au-dessus du dispositif de nettoyage (4).

6. Moissonneuse-batteuse (1) selon l'une des revendications 1 à 5, **caractérisée en ce que** l'ouverture de sortie (30), au nombre d'au moins une, du système de soufflerie aspirante (12) est reliée par au moins un segment de canal (14) à une ouverture d'alimentation du dispositif de répartition (6), le segment de canal (14) pouvant présenter une dérivation (31) qui dévie le flux d'air en partie par rapport au dispositif de répartition (6).

7. Moissonneuse-batteuse (1) selon l'une des revendications 1 à 6, **caractérisée en ce que** le système de soufflerie aspirante (12) aspire l'air sensiblement à travers une zone d'aspiration située devant le dispositif de nettoyage (4), au moins un élément de guidage d'air (42, 43) étant disposé dans la zone d'aspiration.

8. Moissonneuse-batteuse (1) selon la revendication 7, **caractérisée en ce que** l'élément de guidage d'air (42, 43), au nombre d'au moins un, et réalisé sous forme de tôle de guidage et/ou sous forme de lamelles (44) disposées à la manière d'une persienne et étant notamment orientables.

9. Moissonneuse-batteuse (1) selon l'une des revendications 1 à 8, **caractérisée en ce que** le dispositif batteur (2), le dispositif de séparation (3), le dispositif de nettoyage (4), le système de soufflerie aspirante (12) et le dispositif hacheur (5) sont entourés d'un carter de machine (7), sachant qu'au moins dans la région du dispositif batteur (2) et du dispositif de séparation (3), il est prévu des éléments de fermeture qui servent à dévier le flux d'air, aspiré par le système de soufflerie aspirante (12), à l'intérieur du carter de machine (7).

10. Moissonneuse-batteuse (1) selon l'une des revendications 1 à 9, **caractérisée en ce qu'**une chute ventilée se forme entre une table de retour (9), placée sous le dispositif de séparation (3), et une table transporteuse (8) placée sous le dispositif batteur (2).

11. Moissonneuse-batteuse (1) selon l'une des revendications 1 à 10, **caractérisée en ce qu'**au moins un capteur de perte (38) est disposé dans la région de l'ouverture de sortie (30), au nombre d'au moins une, du système de soufflerie aspirante (12).

12. Moissonneuse-batteuse (1) selon l'une des revendications 1 à 11, **caractérisée en ce qu'**un capteur radar est disposé dans la région de l'ouverture de sortie (30), au nombre d'au moins une, du système de soufflerie aspirante (12).

13. Moissonneuse-batteuse (1) selon l'une des revendications 1 à 12, **caractérisée en ce qu'**une cellule de pesage est disposée dans la région de l'ouverture de sortie (30), au nombre d'au moins une, du système de soufflerie aspirante (12).

14. Moissonneuse-batteuse (1) selon l'une des revendications 1 à 13, **caractérisée en ce que** le système de soufflerie aspirante (12) est conçu pour séparer les balles aspirées avec le flux d'air et pour les transférer sur un véhicule de transport.
